(19) Europäisches Patentamt
European Patent Office
Office européen des brevets

(11) **EP 4 246 111 A1**

(12) **EUROPÄISCHE PATENTANMELDUNG**

(43) Veröffentlichungstag:
**20.09.2023   Patentblatt 2023/38**

(21) Anmeldenummer: **23161824.0**

(22) Anmeldetag: **14.03.2023**

(51) Internationale Patentklassifikation (IPC):
**G01L 3/12** (2006.01)        **G01B 11/16** (2006.01)
**G01B 11/26** (2006.01)

(52) Gemeinsame Patentklassifikation (CPC):
**G01L 3/12**

(84) Benannte Vertragsstaaten:
**AL AT BE BG CH CY CZ DE DK EE ES FI FR GB GR HR HU IE IS IT LI LT LU LV MC ME MK MT NL NO PL PT RO RS SE SI SK SM TR**
Benannte Erstreckungsstaaten:
**BA**
Benannte Validierungsstaaten:
**KH MA MD TN**

(30) Priorität: **14.03.2022   AT 501582022**

(71) Anmelder: **Lasagni, Matteo**
**8043 Graz (AT)**

(72) Erfinder: **Lasagni, Matteo**
**8043 Graz (AT)**

(74) Vertreter: **Mathys & Squire**
**Theatinerstraße 7**
**80333 München (DE)**

(54) **MESSVORRICHTUNG ZUM MESSEN EINES DREHMOMENTES**

(57)    Die Erfindung betrifft eine Messvorrichtung (1) zum Messen eines Drehmomentes um eine Achse (2) in einem elastischen Verbindungselement (3) welches ein erstes Element (4) mit einem zweiten Element (5) drehfest um die Achse (2) verbindet, umfassend eine Lichtquelle (6), mindestens einen Spiegel und einen Licht-Sensorarray (7). Erfindungsgemäß ist vorgesehen, dass ein erster Spiegel (8) und ein zweiter Spiegel (9) derart angeordnet sind, dass der erste Spiegel (8) mit dem ersten Element (4) und der zweite Spiegel (9) mit dem zweiten Element (5) starr verbunden sind, wobei mit der Lichtquelle (6) ein Lichtstrahl (10) erzeugt werden kann, der vom ersten Spiegel (8) und vom zweiten Spiegel (9) zumindest einmal reflektiert wird und letztlich auf das Licht-Sensorarray (7) trifft und der Auftreffpunkt des Lichtstrahls (10) im Licht-Sensorarray (7) abhängig vom Drehmoment ist .Mit einer derartigen Vorrichtung können nun auch geringste durch ein Drehmoment verursachte Verdrehwinkel gemessen werden.

Fig. 1

EP 4 246 111 A1

**Beschreibung**

Die Erfindung betrifft eine Messvorrichtung zum Messen eines Drehmoments um eine Achse in einem elastischen Verbindungselement, welches ein erstes Element mit einem zweiten Element drehfest um die Achse verbindet, umfassend eine Lichtquelle, mindestens einen Spiegel und ein Licht-Sensor-Array.

Messvorrichtungen der eingangs genannten Art sind aus dem Stand der Technik vielfach bekannt. So beschreibt die DE 10 2008 054 028 A1 ein Verfahren, bei dem mittels einer Lichtquelle Lichtstrahlung im Inneren eines hohlzylindrischen Körpers erzeugt wird. Weitere Dokumente zeigen vielfach Messanordnungen für Fahrräder. So beschreibt zum Beispiel die DE 20 2018 103 775 U1 oder die CH 702 990 A1 eine optische Vorrichtung zur Messung einer Krafteinwirkung auf eine Fahrradpedalachse. Hier wird durch eine Lichtquelle ein Lichtstrahl erzeugt, der die Fahrradpedalachse entlang der Längsachse durchquert und auf einen Bildsensor fällt. Allen diesen Vorrichtungen ist gemeinsam, dass zur Installation, insbesondere in eine Tretlagerwelle eines Fahrrads, ein Fachmann erforderlich ist, wobei die Vorrichtungen eines bestimmten Anbieters auf einen entsprechenden Fahrradtyp beschränkt sind. Auch müssen oft mechanische Teile ersetzt werden, was zu versteckten Kosten führt. Auch ist allen bekannten Vorrichtungen gemeinsam, dass die Genauigkeit der Messung nicht sehr hoch ist.

Ziel der Erfindung ist es daher, eine Messvorrichtung zu schaffen, die einfach zu installieren und universal kompatibel ist. Weiters soll die Messvorrichtung eine hohe Messgenauigkeit aufweisen.

Die Aufgabe wird erfindungsgemäß durch eine Messvorrichtung der eingangs genannten Art gelöst, bei der ein erster Spiegel und ein zweiter Spiegel derart angeordnet sind, dass der erste Spiegel mit dem ersten Element und der zweite Spiegel mit dem zweiten Element starr verbunden sind, wobei mit der Lichtquelle ein Lichtstrahl erzeugt werden kann, der vom ersten Spiegel und vom zweiten Spiegel zumindest einmal reflektiert wird und letztlich auf das Licht-Sensorarray trifft und der Auftreffpunkt des Lichtstrahls auf das Licht-Sensorarray abhängig vom Drehmoment ist.

So ergibt sich bei einem entsprechend elastischen Verbindungelement eine dem Drehmoment entsprechende Verformung, welche durch die Positionsänderung des Lichtstrahls am Licht-Sensorarray leicht und sehr genau bestimmbar ist. Das Verbindungelement kann dabei aus unterschiedlichsten Materialien ausgebildet sein, welche ein elastisches Verhalten aufweisen, beispielsweise ein Kunststoff oder ein Metall.

Als elastisches Verbindungselement wird im Rahmen dieser Anmeldung jedes Verbindungelement verstanden, welches nach Wegfall einer Belastung wie beispielsweise eines Drehmomentes wieder im Wesentlichen eine ursprüngliche Form bzw. einen Ursprungszustand einnimmt, sodass anhand der Verformung, welche über eine Position des Lichtstrahles auf dem Licht-Sensorarray gemessen wird, auf eine Belastung geschlossen werden kann. Das elastische Verbindungselement kann dabei auch eine sehr hohe Steifigkeit aufweisen, sodass ein Drehmoment nur zu sehr kleinen Verformungen führt. Entsprechend wird hier jedes Verbindungselement als elastisch angesehen, welches zumindest bereichsweise ein elastisches Verformungsverhalten aufweist, sodass grundsätzlich auch ein Verbindungselement aus Keramik als elastisches Verbindungselement angesehen werden kann.

Speziell durch die Mehrfachreflexion des Lichtstrahls kann eine hohe Genauigkeit der Messung im Bereich einer Abweichung des Lichtstrahls von Nanometern erreicht werden. Mehrere Reflexionen verstärken die Abweichung des Lichtstrahles. Mit einen entsprechend ausgebildeten Licht-Sensorarray kann eine Abweichung in einem Bereich von wenigen Nanometer gemessen werden, sodass in Verbindung mit einer entsprechenden Verstärkung der Abweichung durch Mehrfachreflexionen eine hochgenaue Drehmomentmessung möglich ist. Damit kann das Drehmoment besonders genau bestimmt werden.

Das Licht-Sensorarray kann grundsätzlich auf verschiedenste Weisen ausgebildet sein und beispielsweise mehrere in Spalten und Reihen angeordnete Lichtsensoren aufweisen. Weiter kann das Licht-Sensorarray auch durch einen Fotosensor ähnlich einem in einer Digitalkamera eingesetzten Sensor ausgebildet sein, um bereits eine Verschiebung eines Punktes, an welchem ein Lichtstrahl auftrifft, von nur wenigen μm oder nm erfassen zu können. Somit ist eine besonders genaue Drehmomentbestimmung ermöglicht. In einer besonders einfachen Ausführungsform kann das Licht-Sensorarray auch nur durch ein mehrere Fotodioden gebildet werden, welche mit definiertem Abstand zueinander angeordnet sind, um eine Position des Lichtstrahles zu ermitteln.

Bevorzugt ist vorgesehen, dass bei der Messvorrichtung die Lichtquelle einen fokussierten Lichtstrahl aussenden kann und vorzugsweise eine Leuchtdiode (LED) oder eine Laserlichtquelle ist. Wenn durch die Lichtquelle ein fokussierter Lichtstrahl ausgesendet werden kann, kann auch eine entsprechende Abweichung, die von einem Drehmoment hervorgerufen wird, genau erfasst werden.

Es hat sich auch bewährt, dass ein weiterer Spiegel vorgesehen ist, der unter einem Winkel α zur Achse angeordnet ist und den Lichtstrahl auf den ersten Spiegel umlenkt, wobei die Lichtquelle einen vorzugsweise achsparallelen Strahl erzeugen kann, der auf den weiteren Spiegel auftreffen kann. Durch diese Anordnung kann die Lichtquelle gemeinsam mit dem Licht-Sensorarray und weiteren Energie benötigenden Einrichtungen auf einer Seite der Messvorrichtung angeordnet werden.

Eine besonders hohe Messgenauigkeit kann erreicht werden, wenn der erste Spiegel und der zweite Spiegel in einem unbelasteten Zustand parallel bzw. antiparallel zueinander und vorzugsweise parallel zur Achse des Verbindungselements angeordnet sind. Dadurch wird eine Mehrfachreflexion des Lichtstrahls und eine entsprechende Genauigkeit ermöglicht.

Für spezielle Ausführungen hat es sich gezeigt, dass es besonders günstig ist, wenn an das erste Element ein erster erweiterbarer Ring und an das zweite Element ein zweiter erweiterbarer Ring zur Befestigung in einer Hohlwelle festmontiert sind, wobei der erste erweiterbare Ring und der zweite erweiterbare Ring einen Außendurchmesser von 15 mm bis 22 mm aufweisen können. Durch die erweiterbaren Ringe ist eine Anpassung an unterschiedliche Durchmesser von Hohlwellen leicht möglich, da auch die Messvorrichtung selbst nur einen Durchmesser von ca. 10 mm aufweist.

Zur Energieversorgung der Vorrichtung kann beispielsweise ein Energiespeicher wie insbesondere eine Batterie in der Vorrichtung vorgesehen sein. Weiter kann die Vorrichtung auch drahtlos mit Energie versorgt werden, beispielsweise über Bluetooth oder Near-Field-Communication (NFC).

Hierzu ist bevorzugt vorgesehen, dass die Messvorrichtung zur Aufnahme von drahtlos übertragener Energie ausgebildet ist, insbesondere zur Aufnahme von Energie, welche über elektromagnetische Wellen übertragen wird, beispielsweise mit einer Frequenz, welche für Bluethooth oder NFC eingesetzt wird.

Zu diesem Zweck kann in oder an der Messvorrichtung insbesondere eine Antenne zum Empfang derartiger elektromagnetischer Wellen vorgesehen sein. Die derart an die Messvorrichtung übertragene Energie kann anschließend direkt zum Betrieb der Messvorrichtung eingesetzt und/oder in einem Energiespeicher wie einer Batterie oder einem Kondensator gespeichert werden.

Besonders günstig hat sich erwiesen, wenn ein Kondensator zur Energieversorgung vorgesehen ist, wobei vorzugsweise eine Energy-Harvesting-Einrichtung vorgesehen ist, mit welcher bei einer Rotation der Messvorrichtung um die Achse elektrische Energie erzeugt und der Kondensator geladen werden kann. Der Kondensator kann beispielsweise aufgeladen werden, indem Energie aus einer Rotation der Vorrichtung in elektrische Energie umgewandelt wird. Hierzu kann auf aus dem Stand der Technik für das Energy-Harvesting bekannte Einrichtungen zurückgegriffen werden. Beispielsweise kann eine entsprechende Energy-Harvesting-Einrichtung zur Erzeugung elektrischer Energie durch die Ausnutzung der Rotation wie einer Tretkurbelwelle ausgebildet sein, wobei eine Speicherung der Energie im Kondensator erfolgen kann. Weiter kann Energie drahtlos in die Vorrichtung übertragen werden, beispielsweise durch elektromagnetische Wellen, insbesondere Bluetooth oder Near-Field-Communication (NFC).

Der Vorteil, einen Kondensator statt Batterien zu verwenden, ist zweifach: Erstens, die Dichte der speicherbaren Energie ist zehn- bis tausendfach so hoch für einen Kondensator wie für eine Batterie, zweitens benötigt ein Kondensator keinen Ladungskreislauf, den Batterien generell brauchen, sondern kann die Energie direkt einsetzen.

Besonders vorteilhaft hat sich erwiesen, wenn ein Mikrocontroller vorgehsehen ist, der die Lichtquelle steuert und die Daten des Licht-Sensorarray beispielsweise mit Bluetooth nach außen überträgt. Mikrocontroller, Lichtquelle und Licht-Sensorarray können dabei auf einer gemeinsamen Leiterplatte angeordnet sein und eine gemeinsame Energieversorgung mittels des Kondensators nutzen.

Besonders hat sich die Messanordnung als vorteilhaft erwiesen, wenn sie in die Hohlwelle einer Tretlagerwelle eines Fahrrades eingebaut ist. Mit Messanordnungen des Standes der Technik wird nur eine vergleichsweise geringe Genauigkeit bei der Messung des Drehmomentes erreicht. Durch einen geringen Bauraum und Möglichkeit, in einer Hohlwelle montiert zu werden, ergibt sich eine besonders günstige Montage und auch einfache Messung des auf die Tretlagerwelle eines Fahrrades wirkenden Drehmoments. Das erste Element wird dann starr mit einem Teil der Tretlagerwelle verbunden, welcher nahe einer Tretlagerkurbel angeordnet ist, während das zweite Element näher an einem Zahnrad in der Tretlagerwelle angeordnet wird, sodass die Tretlagerwelle in einem Bereich zwischen dem ersten Element und dem zweiten Element ein Moment von der Tretlagerkurbel zum Zahnrad transportiert, welches durch die Messvorrichtung gemessen wird.

Weitere Anwendungen gibt es, wenn die Messvorrichtung in die Hohlwelle einer industriellen Maschine, einer landwirtschaftlichen Maschine, eines Automobiloder Laborinstruments eingebaut ist. Auch hier kann in günstiger Weise ohne Notwendigkeit eines Fachmannes eine Drehmomentmessung erfolgen. Bevorzugt ist bei einer derartigen Welle auch eine Torsionssteifigkeit bekannt, um anhand der Verformung der Hohlwelle und des Verbindungselementes ein Drehmoment zu bestimmen.

Die Anwendung der Messvorrichtung ist nicht auf die Bestimmung eines Drehmomentes beschränkt. Beispielsweise kann die Messvorrichtung auch zur Messung eines Biegemomentes eines Auslegers eingesetzt werden. In dem Fall werden üblicherweise das erste Element und das zweite Element mit sich bei einer Belastung bzw. einem auf den Ausleger wirkenden Biegemoment relativ zueinander bewegenden Teilen des Auslegers verbunden, sodass auch hier anhand einer Verformung des elastischen Verbindungselementes, welche über eine Veränderung einer Position, an welcher der Lichtstrahl auf das Licht-Sensorarray trifft, erfasst wird, auf eine Verformung des Auslegers und über die entsprechenden Steifigkeiten auf eine Belastung wie beispielsweise ein Biegemoment geschlossen werden kann. Es versteht sich, dass abhängig davon, wie die Messvorrichtung an den Ausleger angekoppelt ist, nicht eine Torsionssteifigkeit, sondern eine Biegesteifigkeit es Verbindungselementes in die Berechnung der Belastung abhängig von der Verformung einfließen kann. Entscheidend ist, dass die Verformung auch hier anhand einer Veränderung einer Position ermittelt wird, an welcher der Lichtstrahl auf das Lichtsensor-Array trifft.

Es ist daher bei einem Ausleger mit einer Messvorrichtung zur Messung einer Verformung des Auslegers günstig, wenn die Messvorrichtung erfindungsgemäß ausgebildet ist.

Weitere Merkmale, Vorteile und Wirkungen der Erfindung ergeben sich anhand des nachfolgend dargestellten Ausführungsbeispiels. In den Zeichnungen, auf welche dabei Bezug genommen wird, zeigen:

> Fig. 1 eine Explosionsansicht der erfindungsgemäßen Messvorrichtung und seine Hauptkomponenten;
> Fig. 2 das Arbeitsprinzip der erfindungsgemäßen Messvorrichtung;
> Fig. 3a und 3b die Messvorrichtung in Prinzipdarstellung in unterschiedlichen Ansichten;
> Fig. 4 die Anordnung einer Tretlagerwelle eines Fahrrades.

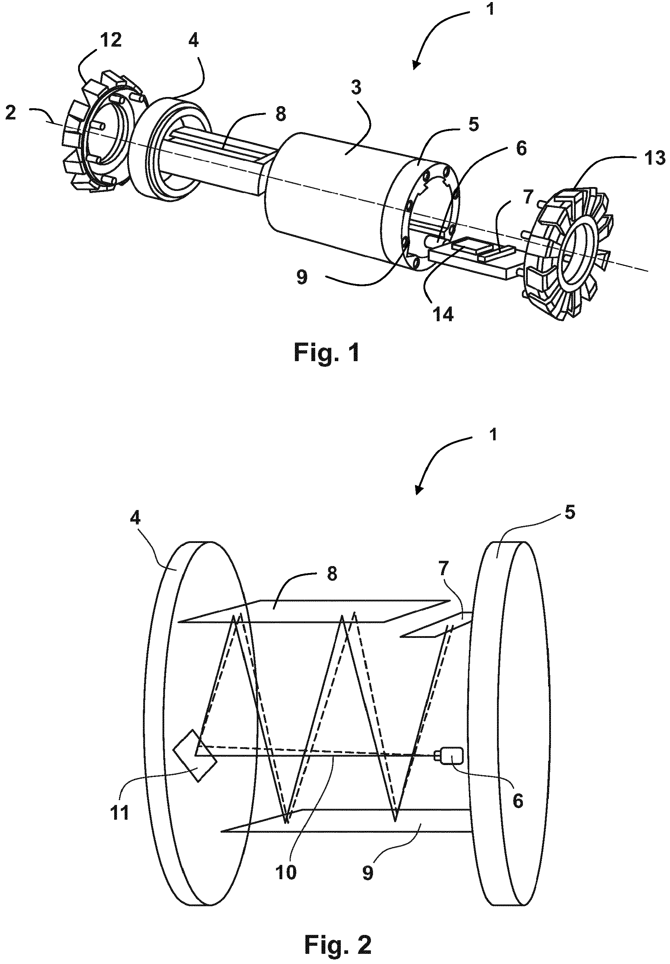

Fig. 1 zeigt nun den Aufbau einer erfindungsgemäßen Messvorrichtung 1, wobei zusätzlich an den Enden ein erster erweiterbarer Ring 12 und ein zweiter erweiterbarer Ring 13 vorgesehen sind, mit denen die Messvorrichtung 1 in einer Hohlwelle befestigt werden kann, beispielsweise reibschlüssig. Grundsätzlich kann die Messvorrichtung 1 aber auch einen rechteckigen oder quadratischen Querschnitt aufweisen. Eine runde Form ist speziell für Anwendungen in drehenden Hohlwellen, wie zum Beispiel einer Tretlagerwelle 15 eines Fahrrads, vorgesehen. Die erfindungsgemäße Messanordnung 1 weist ein erstes Element 4, ein Verbindungselement 3 und ein zweites Element 5 auf. Eine Verarbeitungseinheit besteht aus einer einzigen Leiterplatte, die eine Lichtquelle 6, vorzugsweise eine Laserlichtquelle, ein Licht-Sensorarray 7 und einen Mikrocontroller 14 aufweist. Letzterer steuert sowohl die Lichtquelle 6 als auch das Licht-Sensorarray 7 und tauscht Daten mit externen Einheiten wie beispielsweise einem Smartphone aus, sodass die ein Drehmoment online mittels eines Smartphones überwacht werden kann. Mit dem ersten Element 4 ist ein erster Spiegel 8 und mit dem zweiten Element 5 ein zweiter Spiegel 9 starr verbunden. Das erste Element 4 und das zweite Element 5 sind über das elastische Verbindungselement 3 verbunden, welches auch Teil einer Hohlwelle sein kann, und können daher bei einer Beaufschlagung mit einem Drehmoment gegeneinander eine Verdrehung um einen Winkel φ aufweisen.

Das Licht-Sensorarray 7 kann grundsätzlich auf verschiedenste Weisen ausgebildet sein und beispielsweise mehrere in Spalten und Reihen angeordnete Lichtsensoren aufweisen. Weiter kann das Licht-Sensorarray 7 auch durch einen Fotosensor ähnlich einem in einer Digitalkamera eingesetzten Sensor ausgebildet sein, um bereits eine Verschiebung eines Punktes, an welchem ein Lichtstrahl auftrifft, von nur wenigen μm oder nm erfassen zu können.

In Fig. 2 ist die grundsätzliche Arbeitsweise der Messvorrichtung 1 dargestellt. An einem ersten Element 4 ist ein erster Spiegel 8 fix montiert. Analog ist an dem zweiten Element 5 ein zweiter Spiegel 9 fix montiert. Die am zweiten Element 5 angeordnete Lichtquelle 6, vorzugsweise eine Laserlichtquelle, aber auch eine Leuchtdiode (LED) ist möglich, sendet einen Lichtstrahl 10 auf einen weiteren Spiegel 11 aus, welcher am ersten Element 4 angeordnet wobei die Lichtquelle, vorzugsweise eine Laserlichtquelle, hier zur Aussendung eines achsparallelen Lichtstrahles 10 eingerichtet ist. Der weitere Spiegel 11 reflektiert den Lichtstrahl 10 auf den ersten Spiegel 8, von wo er auf den zweiten Spiegel 9 reflektiert wird, was sich mehrfach wiederholt. Am Ende wird der Lichtstrahl 10 auf das Licht-Sensorarray 7 geworfen. Die durchgezogene Linie des Lichtstrahls 10 stellt ihn in einer Ruheposition dar, während die strichlierte Linie des Lichtstrahls 10 diesen in einem Belastungszustand zeigt und daher eine gewisse Abweichung aufweist. Wie ersichtlich bewirkt eine Verdrehung von erstem Element 4 relativ zu zweitem Element 5 eine Verschiebung eines Punktes, an welchem der Lichtstrahl auf das Licht-Sensorarray 7 trifft. Anhand dieser Verschiebung kann somit auf einen Winkel φ geschlossen werden, um welchen das erste Element 4 relativ zum zweiten Element 5 verdreht wurde. Anhand einer Torsionssteifigkeit von erstem Element 4 und zweitem Element 5 verbindenden Einrichtungen kann dann rechnerisch auf das Drehmoment geschlossen werden.

Es versteht sich, dass die Abbildungen beispielhafte Ausgestaltungen der Erfindung zeigen und von der Erfindung natürlich auch weitere Ausführungen umfasst sind, insbesondere durch abweichende Anordnung der Spiegel 8, 9, bei welcher die Spiegel 8, 9 vertauscht oder sämtlich oberhalb oder unterhalb der Lichtquelle 6 angeordnet sind.

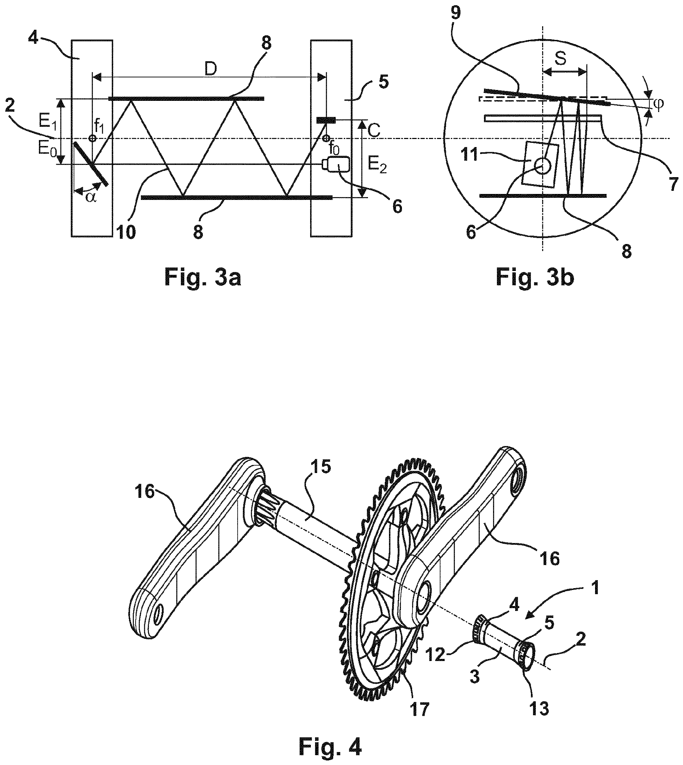

Fig. 3a und Fig. 3b zeigen die Arbeitsweise schematisch dargestellt. In Fig. 3a ist nochmals der Lichtstrahlverlauf in einem Ruhezustand dargestellt. Ein Lichtstrahl 10 wird von einer Lichtquelle 6 auf einen weiteren Spiegel 11 geworfen, von dem er auf den ersten Spiegel 8 und in weiterer Folge auf den zweiten Spiegel 9 mehrfach reflektiert wird bevor er auf das Licht-Sensorarray 7 trifft. Die Genauigkeit der Messung kann durch eine Erhöhung der Anzahl der Reflexionen zwischen erstem Spiegel 8 und zweitem Spiegel 9 erhöht werden. Je höher die Anzahl der Reflexionen ist, desto größer ist die Abweichung S für einen durch ein Drehmoment erzeugten Winkel φ. Eine Änderung der Anzahl der Reflexionen kann erreicht werden durch Einstellung des Ablenkungswinkels $\alpha$ des weiteren Spiegels 11 oder durch Änderung eines der Parameter C, D, $E_0$, $E_1$, $E_2$, wobei $E_0$, $E_1$ und $E_2$ den Abstand der einzelnen Spiegel zur Achse 2 bezeichnen und C den Abstand des Licht-Sensorarrays 7 ebenfalls zur Achse 2 darstellt. D bezeichnet hier den maximalen Abstand von Auftreffpunkt auf den weiteren Spiegel 11 zum Auftreffpunkt auf das Licht-Sensorarray 7. In Fig. 3b ist nun die Ablenkung des Lichtstrahls 10 durch einen durch ein Drehmoment erzeugten Verdrehungswinkel φ dargestellt, wobei S die Ablenkung des Lichtstrahls 10 auf das Licht-Sensorarray 7 darstellt. Aus dieser Abweichung S lässt sich dann der Verdrehwinkel φ bestimmen. Aus dem Verdrehwinkel φ lässt sich dann das Drehmoment τ gemäß folgender Formel bestimmen:

$$\varphi = \tau \times D / (G \times J)$$

wobei φ der Verdrehwinkel, τ das Drehmoment, D die Entfernung zwischen erstem Element und zweitem Element, G der Schermodul des Materials des Verbindungselements 3, und J das polare Trägheitsmoment der Welle darstellt, das für eine gegebene Geometrie konstant ist. Es versteht sich, dass bei einer Anwendung der Messvorrichtung 1, bei welcher erstes Element 4 und zweites Element 5 nicht nur durch das Verbindungselement 3 verbunden sind, sondern beispielsweise parallel auch über eine Hohlwelle, in welcher die Messvorrichtung 1 angeordnet ist, auch eine Torsionssteifigkeit dieser Hohlwelle berücksichtigt werden kann, um das Drehmoment anhand des Verdrehwinkels φ zu bestimmen.

Fig. 4 zeigt nun die Anwendung der Messvorrichtung 1 bei einem Fahrrad. Hier werden mittels einer hohlen Tretlagerwelle 15 die beiden Tretkurbeln 16 verbunden, wobei die Kraft auf ein Zahnrad 17 übertragen wird. Die Messvorrichtung 1 kann hier ohne Demontage von wichtigen Apparatebauteilen in die Hohlwelle eingebracht werden. Durch die beiden vorgesehenen erweiterbaren Ringe 12, 13 kann die Messvorrichtung 1 an verschiedene Durchmesser von Tretlagerwellen 15 angepasst werden und wird dort mittels erweiterbaren Ringen 12,13 mit der Tretlagerwelle 15 kraftschlüssig verbunden. Der innere Durchmesser kann dabei beispielsweise zwischen 15 mm und 22 mm liegen, was eine optimale Anpassung an verschiedene Fahrradtypen und -marken ermöglicht. Durch die Tretkraft auf die Tretkurbeln 16 wird nun ein Drehmoment in der Tretlagerwelle 15 erzeugt, das in weiterer Folge auf die Messvorrichtung 1 übertragen wird. Aus dem durch das Drehmoment erzeugten Verdrehwinkel φ zwischen erstem Element 4 und zweiten Element 5, welcher abhängig von einer Torsionssteifigkeit der Tretlagerwelle 15 ist, kann nun das Drehmoment τ berechnet werden, wobei die Daten aus der Messvorrichtung 1 an ein externes Datenverarbeitungssystem wie beispielsweise ein Smartphone übertragen werden, beispielsweise mittels eines drahtlosen Datenübertragungsverfahren wie Bluetooth.

Wenn zwei erfindungsgemäße Messvorrichtungen 1 eingesetzt werden, wobei eine erste Messvorrichtung 1 zwischen der ersten Tretkurbel 16 und dem Zahnrad 17 und eine zweite Messvorrichtung 1 zwischen der zweiten Tretkurbel 16 und dem Zahnrad 17 in die Tretlagerwelle 15 eingesetzt wird, ist es möglich, sowohl das mit der rechten Tretkurbel 16 als auch das mit der linken Tretkurbel 16 aufgebrachte Drehmoment zu messen. Es kann allerdings auch ausreichend sein, nur eine Messvorrichtung 1 einzusetzen, da die Belastung ohnedies etwa symmetrisch ist.

Zur Versorgung der Messvorrichtung kann beispielsweise ein nicht dargestellter Kondensator mit dem zweiten Element verbunden sein, welcher durch eine ebenfalls nicht dargestellte Energy-Harvesting-Einrichtung durch eine Drehung der Tretlagerwelle geladen wird. Es ist somit nicht erforderlich, eine zusätzliche Energieversorgung vorzusehen-

Um eine Messvorrichtung 1 für die Tretkraft eines Radfahrers während des Fahrens zu finden, wurde ein optischer Drehmomentsensor für vielfältige Anwendung entwickelt. Die messbare Tretkraft hängt im Wesentlichen von zwei Faktoren ab: Dem Drehmoment, das in der Tretkurbelwelle erzeugt wird und der Drehzahl, während die Drehzahl aus dem Drehmoment geschlossen werden kann (das Drehmoment erreicht einen Höhepunkt bei jeder Drehung der Tretlagerwelle 15, nämlich wenn der Radfahrer das Pedal tritt). Ein Weg um das aufgebrachte Drehmoment zu messen ist es, den mikroskopischen Verdrehwinkel φ, der zwischen zwei getrennten Querschnitten der Tretkurbelwelle 15 existiert, zu messen. Durch die erfindungsgemäße Messvorrichtung 1 kann nun eine Abweichung eines Lichtstrahls im Bereich von wenigen Nanometern gemessen werden. Dies wird auch durch die vielfache Reflexion des Lichtstrahls 10 zwischen zwei Spiegeln 8, 9 ermöglicht. Mit der Erfindung wird es nun, abgesehen von anderen Anwendungsmöglichkeiten, möglich, die von einem Radfahrer aufgebrachte Kraft kontinuierlich zu messen.

Grundsätzlich kann die erfindungsgemäße Messvorrichtung 1 in verschiedensten Vorrichtungen eingesetzt werden um Drehmomente zu messen. Dies ist besonders vorteilhaft bei industriellen Maschinen oder landwirtschaftlichen Maschinen der Fall. Auch bei Automobilen kann der Einsatz vorteilhaft sein.

Grundsätzlich kann die erfindungsgemäße Messvorrichtung 1 über die Messung eines Drehmomentes hinaus auch zur Erfassung anderer Verformungen eingesetzt werden, beispielsweise zur Erfassung eines Biegemomentes um eine zur Rotationsachse normalen Achse 2. In diesem Fall sind natürlich andere Steifigkeiten zur berücksichtigen, um anhand der Verformung auf das Biegemoment schließen zu können. Die Anwendung der Vorrichtung ist daher nicht auf die Bestimmung von Drehmomenten beschränkt, wenngleich dies die bevorzugte Anwendung ist. Beispielsweise kann mit einer entsprechenden Vorrichtung auch die Verformung eines Auslegers bestimmt werden.

**Patentansprüche**

1.  Messvorrichtung (1) zum Messen eines Drehmomentes um eine Achse (2) in einem elastischen Verbindungselement (3) welches ein erstes Element (4) mit einem zweiten Element (5) drehfest um die Achse (2) verbindet, umfassend eine Lichtquelle (6), mindestens einen Spiegel und einen Licht-Sensorarray (7) **dadurch gekennzeichnet, dass** ein erster Spiegel (8) und ein zweiter Spiegel (9) derart angeordnet sind, dass der erste Spiegel (8) mit dem ersten Element (4) und der zweite Spiegel (9) mit dem zweiten Element (5) starr verbunden sind, wobei mit der Lichtquelle (6) ein Lichtstrahl (10) erzeugt werden kann, der vom ersten Spiegel (8) und vom zweiten Spiegel (9) zumindest einmal reflektiert wird und letztlich auf das Licht-Sensorarray (7) trifft und der Auftreffpunkt des Lichtstrahls (10) im Licht-Sensorarray (7) abhängig vom Drehmoment ist.

2. Messvorrichtung (1) nach Anspruch 1, **dadurch gekennzeichnet, dass** die Lichtquelle (6) einen fokussierten Lichtstrahl (10) aussenden kann, vorzugsweise eine Leuchtdiode (LED) oder eine Laserlichtquelle ist.

3. Messvorrichtung (1) nach Anspruch 1 oder 2, **dadurch gekennzeichnet, dass** ein weiterer Spiegel (11) vorgesehen ist, der unter einem Winkel α zur Achse (2) angeordnet ist und den Lichtstrahl (10) auf den ersten Spiegel (8) umlenkt.

4. Messvorrichtung (1) nach Anspruch 3, **dadurch gekennzeichnet, dass** die Lichtquelle (6) einen vorzugsweise achsparallelen Strahl (10) erzeugt, der auf den weiteren Spiegel (11) auftrifft.

5. Messvorrichtung (1) nach einem der Ansprüche 1 bis 4, **dadurch gekennzeichnet, dass** der erste Spiegel (8) und der zweite Spiegel (9) in einem unbelasteten Zustand parallel zueinander und vorzugsweise parallel zur Achse (2) des Verbindungselements (3) angeordnet sind.

6. Messvorrichtung (1) nach einem der Ansprüche 1 bis 5, **dadurch gekennzeichnet, dass** an das erste Element (4) ein erster erweiterbarer Ring (12) und an das zweite Element (5) ein zweiter erweiterbarer Ring (13) zur Befestigung in einer Hohlwelle fest montiert sind, wobei vorzugsweise der erste erweiterbare Ring (12) und der zweite erweiterbare Ring (13) einen Außendurchmesser von 15 - 22 mm aufweisen.

7. Messvorrichtung (1) nach einem der Ansprüche 1 bis 6, **dadurch gekennzeichnet, dass** ein Kondensator zur Energieversorgung vorgesehen ist, wobei vorzugsweise eine Energy-Harvesting-Einrichtung vorgesehen ist, mit welcher bei einer Rotation der Messvorrichtung um die Achse elektrische Energie erzeugt und der Kondensator geladen werden kann.

8. Messvorrichtung (1) nach einem der Ansprüche 1 bis 7, **dadurch gekennzeichnet, dass** ein Energiespeicher, insbesondere eine Batterie, vorgesehen ist.

9. Messvorrichtung (1) nach einem der Ansprüche 1 bis 8, **dadurch gekennzeichnet, dass** die Messvorrichtung zur Aufnahme von drahtlos übertragener Energie ausgebildet ist, insbesondere zur Aufnahme von Energie, welche über elektromagnetische Wellen übertragen wird, beispielsweise mit einer Frequenz, welche für Bluethooth oder NFC eingesetzt wird.

10. Messvorrichtung (1) nach einem der Ansprüche 1 bis 9, **dadurch gekennzeichnet, dass** ein Mikrocontroller (14) vorgesehen ist, der die Lichtquelle (6) steuert und die Daten des Licht-Sensorarray (7) beispielsweise mit Bluetooth nach außen überträgt.

11. Messvorrichtung (1) nach einem der Ansprüche 6 bis 10, **dadurch gekennzeichnet, dass** die Messvorrichtung (1) besonders bevorzugt in die Hohlwelle einer Tretlagerwelle (15) eines Fahrrades eingebaut ist.

12. Messvorrichtung (1) nach einem der Ansprüche 6 bis 10, **dadurch gekennzeichnet, dass** die Messvorrichtung (1) in die Hohlwelle einer industriellen Maschine, einer landwirtschaftlichen Maschine, eines Automobil- oder Laborinstrumentes eingebaut ist.

13. Ausleger mit einer Messvorrichtung (1) zur Messung einer Verformung des Auslegers, **dadurch gekennzeichnet, dass** die Messvorrichtung (1) nach einem der Ansprüche 1 bis 12 ausgebildet ist.

**Fig. 1**

**Fig. 2**

**Fig. 3a**

**Fig. 3b**

**Fig. 4**

Europäisches
Patentamt

European
Patent Office

Office européen
des brevets

## EUROPÄISCHER RECHERCHENBERICHT

Nummer der Anmeldung

EP 23 16 1824

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | US 3 196 675 A (BUCHELE DONALD R ET AL) 27. Juli 1965 (1965-07-27) * Spalte 2, Zeile 27 – Spalte 4, Zeile 69; Abbildungen 1-4 * ----- | 1-13 | INV. G01L3/12 G01B11/16 G01B11/26 |
| X | DE 10 2008 003026 A1 (GM GLOBAL TECH OPERATIONS INC [US]) 14. August 2008 (2008-08-14) * Absatz [0028] – Absatz [0044]; Abbildungen 1-7 * ----- | 1-4,6-13 | |
| X | RU 2 681 663 C1 (FEDERALNOE GOSUDARSTVENNOE AVTONOMNOE OBRAZOVATELNOE UCHREZHDENIE VYSS) 12. März 2019 (2019-03-12) * das ganze Dokument * ----- | 1-4,6-13 | |
| X | DE 195 23 756 A1 (SCHLATTL WERNER BAVARIA TECH [DE]) 2. Januar 1997 (1997-01-02) * Spalte 1, Zeile 64 – Spalte 6, Zeile 28; Abbildungen 1-15 * ----- | 1-4,6-13 | RECHERCHIERTE SACHGEBIETE (IPC) |
| X | DE 10 2016 001227 A1 (KUKA ROBOTER GMBH [DE]) 10. August 2017 (2017-08-10) * Absatz [0064] – Absatz [0095]; Abbildungen 1-7 * ----- | 1-4,6-13 | G01L G01B |
| A | WO 2014/064245 A1 (UNIV DANMARKS TEKNISKE [DK]) 1. Mai 2014 (2014-05-01) * das ganze Dokument * ----- | 1-13 | |
| A | WO 2010/132926 A1 (TORQUE WIZZ PTY LTD [AU]; SMITH ROBERT MASTERTON [AU]) 25. November 2010 (2010-11-25) * das ganze Dokument * ----- | 1-13 | |
| A | EP 2 213 996 A1 (DELPHI TECH INC [US]) 4. August 2010 (2010-08-04) * das ganze Dokument * ----- | 1-13 | |

Der vorliegende Recherchenbericht wurde für alle Patentansprüche erstellt

| Recherchenort | Abschlußdatum der Recherche | Prüfer |
|---|---|---|
| Den Haag | 3. August 2023 | Gruss, Christian |

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 23 16 1824

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

03-08-2023

| Im Recherchenbericht angeführtes Patentdokument | Datum der Veröffentlichung | Mitglied(er) der Patentfamilie | Datum der Veröffentlichung |
|---|---|---|---|
| US 3196675 A | 27-07-1965 | KEINE | |
| DE 102008003026 A1 | 14-08-2008 | CN 101236114 A<br>DE 102008003026 A1<br>US 2008156972 A1 | 06-08-2008<br>14-08-2008<br>03-07-2008 |
| RU 2681663 C1 | 12-03-2019 | KEINE | |
| DE 19523756 A1 | 02-01-1997 | KEINE | |
| DE 102016001227 A1 | 10-08-2017 | CN 209589310 U<br>DE 102016001227 A1<br>DE 202016008711 U1<br>WO 2017133843 A1 | 05-11-2019<br>10-08-2017<br>22-02-2019<br>10-08-2017 |
| WO 2014064245 A1 | 01-05-2014 | KEINE | |
| WO 2010132926 A1 | 25-11-2010 | KEINE | |
| EP 2213996 A1 | 04-08-2010 | KEINE | |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102008054028 A1
- DE 202018103775 U1
- CH 702990 A1